# EUROPÄISCHE PATENTSCHRIFT

(11) **EP 1 860 514 B1**
(45) Veröffentlichungstag und Bekanntmachung des Hinweises auf die Patenterteilung: **23.12.2009**
(21) Anmeldenummer: 06010924.6
(22) Anmeldetag: 26.05.2006
(51) Int. Cl.: G05B 19/05, G06F 9/445

(54) **Anordnung mit mindestens zwei über Kommunikationsmittel verbundenen Automatisierungsgeräten**
Arrangement with at least two automation devices which are connected via communication means
Agencement comprenant au moins deux dispositifes d'automation, connectés par de moyens de communication

(43) Veröffentlichungstag der Anmeldung: 28.11.2007
(73) Patentinhaber: SIEMENS AKTIENGESELLSCHAFT, 80333 München (DE)
(72) Erfinder: Steinegger, Andreas, 76187 Karlsruhe (DE)

(56) Entgegenhaltungen:
- EP-A1- 0 106 213
- WO-A-01/37058
- WO-A2-2005/024628
- DE-C1- 10 057 782

## Beschreibung

Die Erfindung betrifft eine Anordnung mit mindestens zwei über Kommunikationsmittel verbundenen Automatisierungsgeräten, wobei während eines Aufdatvorgangs Daten von einem der Automatisierungsgeräte zu dem anderen Automatisierungsgerät transferiert werden.

Aus dem Siemens-Katalog ST 70, Seite 5/2, Ausgabe 2005 ist ein hochverfügbares Automatisierungssystem mit redundant ausgelegtem Aufbau bekannt, welches für Anwendungen mit hohen Anforderungen an die Ausfallsicherheit geeignet ist. Dort können Daten während eines RUN-Betriebs einer Master-CPU, während dessen die Master-CPU einen technischen Prozess steuert, von einem Speicher dieser Master-CPU in einen Speicher einer in einen Stopp-Zustand geschalteten Reserve-CPU transferiert werden. Dieser Datentransfer, welcher eine erhöhte Kommunikationslast bedeutet, wird gewöhnlich als "Aufdaten" bezeichnet, wobei dieses Aufdaten häufig in mehreren Schritten erfolgt. In einem ersten Schritt werden über eine Kommunikationsverbindung statische, in einem zweiten dynamische und in einem dritten Schritt sich verändernde dynamische Daten abgeglichen. Nach diesem Aufdatvorgang ist auch die Reserve-CPU in der Lage, die Prozesssteuerung zu übernehmen.

DE 199 56 271 A1 offenbart ein Automatisierungsgerät zur Steuerung und/oder Überwachung eines technischen Prozesses. Dort sind Maßnahmen vorgesehen, durch welche beim Ankoppeln eines redundanten Automatisierungsgerätes an dieses Automatisierungsgerät ein Aufdaten effizient und ohne merkliche Störungen der Steuerung eines technischen Prozesses ermöglicht wird.

Aus der EP 0 106 213 A1 ist ein dezentrales Informationsverarbeitungssystem mit mehreren Arbeitsstationen und einem System-Controller bekannt, welcher ein Programm von einer dieser Arbeitsstationen empfängt und dieses Programm der anderen Arbeitsstation übermittelt.

DE 100 57 782 C1 offenbart ein Verfahren und eine Vorrichtung zum Überführen einer Prozesssteuerung von einem Solobetrieb in einen redundanten Steuerungsbetrieb. Es werden Maßnahmen vorgeschlagen, mittels deren nur geänderte Daten von einem Automatisierungsgerät zu einem weiteren Automatisierungsgerät übermittelt werden.

WO 2005/024628 A1 beschreibt ein Verfahren zum Aktualisieren (Updaten) einer Firmware oder einer Software eines mobilen elektronischen Gerätes.

Eine Anordnung gemäß dem Oberbegriff des Patenanspruchs ist aus der WO 01/37058 A1 bekannt. Dort sind Maßnahmen vorgesehen, welche ein effizienteres Aufdaten ermöglichen.

Der vorliegenden Erfindung liegt die Aufgabe zugrunde, eine Anordnung der eingangs genannten Art zu schaffen, mit welcher die Kommunikationslast der Automatisierungsgeräte vermindert wird.

Diese Aufgabe wird durch die im kennzeichnenden Teil des Anspruchs angegebenen Maßnahmen gelöst.

Der Daten- bzw. Informationsaustausch zwischen den Automatisierungsgeräten erfolgt im Wesentlichen durch die Rechnereinheit, wodurch die Automatisierungsgeräte entlastet werden und diese für die eigentliche Steueraufgabe genutzt werden können. Die Rechnereinheit repräsentiert im Wesentlichen eine Highspeed-Kommunikationsschnittstelle, welche speziell für die Kommunikation insbesondere hardwaremäßig ausgestaltet ist. Die Rechnereinheit kann zur Erhöhung der Kommunikationleistung mit einem entsprechend getakteten Prozessor und mit einem Lüfter ausgestattet sein, welche in Automatisierungsgeräten üblicherweise nicht eingesetzt werden. Darüber hinaus kann die Rechnereinheit mit einer geeigneten Software z. B. zur Diagnose der Automatisierungsgeräte versehen werden.

Die Rechnereinheit weist eine Abbildungsvorschrift auf, durch welche zu transferierende Daten an die Datenstruktur des anderen Automatisierungsgerätes angepasst werden.
Vorteilhaft ist, dass dadurch ein Aufdaten auch dann möglich ist, falls die Automatisierungsgeräte mit unterschiedlichen Hard- und/oder Firm- und/oder Software-Ständen versehen sind. Die Daten des transferierenden Automatisierungsgerätes werden durch die Rechnereinheit an die Datenstruktur des empfangenden Automatisierungsgerätes angepasst. Im Unterschied zum Stand der Technik ist es daher für das Aufdaten nicht erforderlich, sicherzustellen, dass die Automatisierungsgeräte gleiche Hard- und/oder Firmware-Stände aufweisen. Ein Hochrüsten eines redundanten Automatisierungssystems auf einen neueren Hard- und/oder Firmware- und/oder Software-Stand im laufenden Betrieb wird ermöglicht.

Die Rechnereinheit weist Mittel auf, die es ermöglichen, vor dem Aufdatvorgang aus logischen Informationen physikalische Informationen zu gewinnen, um den Datentransfer im Rahmen eines anstehenden Aufdatvorgangs zu beschleunigen. Ferner weist die Rechnereinheit Mittel auf, welche die Hard- und/oder Firmware der Automatisierungsgeräte analysieren und aus dem Analyseergebnis die Abbildungsvorschrift automatisch erzeugen, wodurch ein benutzerfreundliches Aufdaten geschaffen wird.

Anhand der Zeichnung, in der ein Ausführungsbeispiel der Erfindung veranschaulicht, ist, werden im Folgenden die Erfindung, deren Ausgestaltungen sowie Vorteile näher erläutert.

Es zeigen:
Figur 1 eine Anordnung mit Automatisierungsgeräten und
Figur 2 eine redundante Automatisierungseinrichtung.

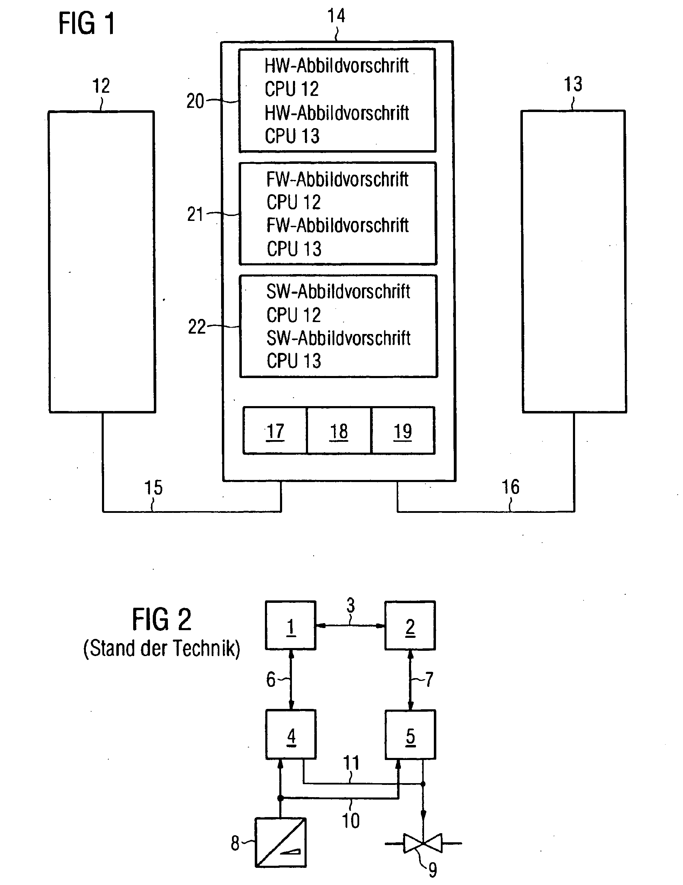

Dazu wird zunächst auf Figur 2 verwiesen, in welcher eine an sich bekannte redundante Automatisierungseinrichtung dargestellt ist. Die redundante Automatisierungseinriohtunq ist gemäß einem 1-von-2-Prinzip aufgebaut und umfasst eine erste Redundanzeinheit in Form eines ersten Automatisierungsgerätes mit einer ersten CPU-Einheit 1 und einer ersten Peripherieeinheit 4 und eine zweite Redundanzeinheit in Form eines zweiten Automatisierungsgerätes mit einer zweiten CPU-Einheit 2 sowie einer zweiten Peripherieeinheit 5. Die Peripherieeinheiten 4, 5 sind sowohl für einen Betrieb als Analogeingabe als auch für einen Betrieb als Analogausgabe vorgesehen. Sensoren 8, z. B. so genannte Zweileiter-Messumformer, erfassen Prozesssignale eines zu steuernden technischen Prozesses, welche von den Peripherieeinheiten 4, 5 redundant über Leitungen 10 eingelesen und über geeignete serielle oder parallele Busse 6, 7 den CPU-Einheiten 1, 2 in Form von digitalen Signalen übermittelt werden. Die CPU-Ein-heiten 1, 2 verarbeiten diese Signale zu entsprechenden Steuersignalen für Aktoren 9, wobei nur eine der Redundanzeinheiten diese Steuersignale den Aktoren 9 über eine Leitung 11 übermittelt. Die Redundanzeinheiten arbeiten nach einem Master-Reserve-Betrieb, was bedeutet, dass nur eine Redundanzeinheit aktiv ist, die andere dagegen passiv geschaltet ist. Nur die aktive Redundanzeinheit steuert die Aktoren 9 über ihre Peripherieeinheit an, die andere Redundanzeinheit übermittelt ihrer Peripherieeinheit lediglich ein Nullsignal. Im vorliegenden Beispiel führt ein Analogausgabeteil von einer der Peripherieeinheiten 4, 5 einem Brennstoffventil eine Stellgröße in Form eines Stromsignals in einem Bereich von 0 bis 20 mA, 4 bis 20 mA oder in einem Bereich von -20 bis +20 mA zu. Zum Aufdaten bzw. zum Austausch von Informationen, z. B. in Form von Status- und Abgleichinformationen, ist eine Kommunikationsverbindung bzw. Redundanzkopplung 3 vorgesehen, über welche die Redundanzeinheiten miteinander verbunden sind. Für den Fall, dass die aktive Redundanzeinheit nicht störungsfrei arbeitet, zeigt die aktive Redundanzeinheit über die Redundanzkopplung 3 der passiven Redundanzeinheit die Störung an, wodurch die gerade passive Redundanzeinheit in die aktive Betriebsart wechselt, d. h., diese Redundanzeinheit wird aktiv geschaltet und übernimmt den Master-Betrieb, dagegen wird die gerade aktive Redundanzeinheit passiv geschaltet und wechselt in den Reserve-Betrieb.

Um die Kommunikationslast der Automatisierungsgeräte während eines Aufdatvorgangs zu vermindern, ist vorgesehen, die Kommunikationsverbindung der beiden Automatisierungsgeräte "intelligent" auszugestalten. Zur näheren Erläuterung wird im Folgenden auf Figur 1 verwiesen, in der eine Anordnung mit zwei Automatisierungsgeräten dargestellt ist. Der Einfachheit halber sind lediglich CPU-Einheiten 12, 13 dieser Automatisierungsgeräte gezeigt, von denen die CPU-Einheit 12 als Master-CPU und die CPU-Einheit 13 als Reserve-CPU betrieben wird. Die CPU-Einheiten 12, 13 sind über Kommunikationsmittel in Form einer Rechnereinheit 14 und Kommunikationsleitungen 15, 16 miteinander verbunden. Die Rechnereinheit 14 weist geeignete Hard- und/oder Firm- und/oder Software-Bausteine 17, 18, 19 auf, um eine störungsfreie Kommunikation sowohl mit der Master-CPU 12 als auch mit der Reserve-CPU 13 zu ermöglichen, wobei auch unterschiedliche Kommunikationsprotokolle zwischen Master-CPU 12 und Rechnereinheit 14 einerseits und Reserve-CPU 13 und Rechnereinheit 14 andererseits eingesetzt werden können. Darüber hinaus kann die hardwaremäßige Verbindung (z. B. Kommunikationsleitung und/oder -anschaltung) zwischen Master-CPU 12 und Rechnereinheit 14 von der zwischen Rechnereinheit 14 und Reserve-CPU 13 verschieden sein. Die Rechnereinheit 14 "spiegelt" quasi den CPU-Einheiten 12, 13 einen Kommunikationspartner mit gleicher Hard- und Software vor und setzt beispielsweise auch logische Adressen in physikalische Adressen um. Die Rechnereinheit 14 empfängt während des Aufdatvorgangs Daten der Master-CPU 12, welche die Rechnereinheit 14 zunächst in einen ihrer Speicher hinterlegt, wobei die Rechnereinheit 14 den Empfang dieser Daten der Master-CPU 12 quittiert, was bedeutet, dass die Kommunikation für die Master-CPU 12 abgeschlossen ist und diese Steueraufgaben bearbeiten kann. Nach der Kommunikation zwischen der Master-CPU 12 und der Rechnereinheit 14 erfolgt ein Informations- bzw. Datenaustausch zwischen der Rechnereinheit 14 und der Reserve-CPU 13, wobei die Rechnereinheit 14 die im Speicher der Rechnereinheit 14 hinterlegten Daten ausliest und der Reserve-CPU 13 übermittelt, welche den Empfang der Daten quittiert, wodurch die Kommunikation zwischen der Reserve-CPU 13 und der Rechnereinheit 14 abgeschlossen ist.

Es kann nun vorkommen, dass eine Hochrüstung der Master- und/oder der Reserve-CPU 12, 13 von einem "alten" auf einen "neuen" Hard- und/oder Firm- und/oder Software-Stand während eines Steuerbetriebs erfolgen muss. In diesem Fall steuert beispielsweise die noch nicht hochgerüstete Master-CPU 12 den technischen Prozess, während die Reserve-CPU 13 hochgerüstet wird. Nach dieser Hochrüstung startet die Master-CPU 12 einen Aufdatvorgang, wobei nach diesem Aufdatvorgang die Reserve-CPU 13 den Prozess steuert und die Master-CPU 12 nun ebenfalls hochgerüstet wird. Damit die zu übermittelnden Daten trotz unterschiedlicher Hard- und/oder Firm- und/oder Software-Stände von Master-CPU 12 und Reserve-CPU 13 von der Reserve-CPU 13 korrekt interpretiert werden können, weist die Rechnereinheit 14 Abbildungsvorschriften 20, 21, 22 auf, aufgrund deren die von der Master-CPU 12 zur Reserve-CPU 13 zu transferierenden Daten an eine Datenstruktur der Reserve-CPU 13 angepasst werden. Dabei sind in der Abbildungsvorschrift 20 die Hardware-, in der Abbildungsvorschrift 21 die Firmware- und in der Abbildungsvorschrift 22 die Software-Eigenschaften bzw. -Transformationen der Master- und der Reserve-CPU 12, 13 formuliert und softwaremäßig verwirklicht. Dadurch, dass die Rechnereinheit 14 die Anpassung der Datenstrukturen bewirkt, ist eine derartige Anpassung auf den CPU-Einheiten der Automatisierungsgeräte nicht erforderlich, wodurch die Performance im Hinblick auf die Abarbeitung von Steuerprogrammen verbessert wird. Darüber hinaus brauchen Abbildungsvorschriften im Rahmen einer CPU-Neu- bzw. -Weiterentwicklung nicht berücksichtigt werden. Die Abbildungsvorschriften sind Bestandteil der Rechnereinheit 14 und können eigenständig erstellt und vermarktet werden.

## Patentansprüche

1. Anordnung mit mindestens zwei über Kommunikationsmittel (14, 15, 16) verbundenen Automatisierungsgeräten (12, 13), wobei während eines Aufdatvorgangs Daten von einem der Automatisierungsgeräte (12, 13) zu dem anderen Automatisierungsgerät (12, 13) transferiert werden, wobei ferner gemäß einer Abbildungsvorschrift (20, 21, 22) zu transferierende Daten an eine Datenstruktur des anderen Automatisierungsgerätes angepasst werden, **dadurch gekennzeichnet, dass** die Kommunikationsmittel (14, 15, 16) eine Rechnereinheit (14) umfassen, welche die Abbildungsvorschrift aufweist.

## Claims

1. Arrangement having at least two automation appliances (12, 13) which are connected via communication means (14, 15, 16), wherein data are transferred from one of the automation appliances (12, 13) to the other automation appliance (12, 13) during an update operation, with data which is to be transferred on the basis of a mapping specification (20, 21, 22) also being matched to a data structure from the other automation appliance, **characterized in that** the communication means (14, 15, 16) comprise a computer unit (14) which has the mapping specification.

## Revendications

1. Dispositif comportant au moins deux appareils d'automatisation ( 12, 13 ) reliés par un moyen ( 14, 15, 16 ) de communication, dans lequel pendant un processus d'application des données sont transférées de l'un des appareils d'automatisation ( 12, 13 ) à l'autre appareil d'automatisation ( 12, 13 ), dans lequel des données à transférer en outre suivant une règle de représentation sont adaptées à une structure de données de l'autre appareil d'automatisation, **caractérisé en ce que** le moyen ( 14, 15, 16 ) de communication comporte une unité ( 14 ) de calcul, qui comporte la règle de représentation.
